# DEMANDE DE BREVET EUROPEEN

(11) **EP 4 733 860 A1**
(43) Date de publication de la demande: **29.04.2026**
(21) Numéro de dépôt: 24208575.1
(22) Date de dépôt: 24.10.2024
(51) Int. Cl.: G04B 19/32, B32B 7/023, C09K 11/02, F21K 2/00, G09F 13/20, G04B 19/12

(54) **DÉCOR ADHÉSIF LUMINESCENT POUR COMPOSANT HORLOGER**

(71) Demandeur: The Swatch Group Research and Development Ltd, 2074 Marin (CH)
(72) Inventeur: FRANÇOIS, Nicolas, 2000 Neuchâtel (CH); TERES, Nathalie, 2014 Bôle (CH); CHARTREL, Benjamin, 2072 St-Blaise (CH)
(74) Mandataire: ICB SA

(57) **Abrégé**

L'invention concerne un adhésif (1) luminescent pour composant horloger comprenant :
- une première couche (10) d'une matière adhésive ;
- une seconde couche (11), dite couche intermédiaire, comprenant un liant chargé entre 10% et 80% en masse d'un pigment phosphorescent émettant dans le spectre UVA ;
- une troisième couche semi-transparente aux rayons UV (12) comprenant un liant chargé entre 10% et 50% en masse d'un pigment phosphorescent émettant dans le spectre visible.

## Description

### Domaine technique de l'invention

La présente invention concerne un décor adhésif luminescent pour composant horloger.

### Arrière-plan technologique

On connaît déjà des cadrans d'horlogerie présentant sur une de leurs faces des éléments décoratifs rapportés destinés à former des signes horaires.

Une première technique de fabrication de ces cadrans consiste à fixer les éléments décoratifs, généralement des appliques, présentant chacune au moins un pied destiné à être chassé dans un perçage du cadran. Cette technique présente toutefois l'inconvénient de devoir réaliser et manipuler de nombreuses pièces de très faibles dimensions, ce qui nécessite une main d'oeuvre qualifiée et conduit à des prix de revient élevés.

Une autre technique de fixation classique d'éléments décoratifs comportant une surface de base plane consiste à coller, à l'aide d'une colle liquide ou semi-liquide, les éléments décoratifs par leur surface de base dans des creusures fraisées dans l'épaisseur du cadran à des endroits prédéterminés. Cette technique bien que moins coûteuse que la précédente présente toutefois de nombreux inconvénients.

En effet, un premier inconvénient est que le collage des éléments décoratifs est difficile à réaliser de façon automatisée en raison des faibles dimensions des éléments décoratifs en question. Les opérations de collage de chaque élément décoratif doivent être réalisées manuellement, ce qui augmente de façon importante les coûts de fabrication de ces cadrans.

Un deuxième inconvénient réside dans le fait qu'il est difficile de doser de façon précise la quantité de colle à déposer dans chaque creusure pour réaliser un collage satisfaisant.

### Résumé de l'invention

La présente invention a pour but de remédier aux problèmes mentionnés ci-dessus ainsi qu'à d'autres encore en proposant un décor adhésif luminescent.

A cet effet, l'invention concerne adhésif luminescent pour composant horloger comprenant :
- une première couche d'une matière adhésive ;
- une seconde couche, dite couche intermédiaire, comprenant un liant chargé entre 10% et 80% en masse d'un pigment phosphorescent émettant dans le spectre UVA ;
- une troisième couche comprenant un liant chargé entre 10% et 50% en masse d'un pigment phosphorescent émettant dans le spectre visible.

Conformément à d'autres variantes avantageuses de l'invention :
- la troisième couche est semi-transparente aux rayons UV ;
- la première couche est de type époxy, acrylique, polyuréthane ou un solvant caoutchouc ;
- le pigment phosphorescent émettant dans le spectre UVA présente un pic d'émission à une longueur d'onde comprise entre 300nm et 400nm ;
- la première couche comprend une épaisseur comprise entre 20µm et 200µm ;
- la deuxième couche comprend une épaisseur comprise entre 50µm et 500µm ;
- la troisième couche comprend une épaisseur comprise entre 50µm et 500µm ;
- le pigment phosphorescent émettant dans le spectre visible est de l'aluminate de strontium (SrAl2O4) dopé avec de l'europium (Eu2+) ou du dysprosium (Dy3+) ;
- le pigment phosphorescent émettant dans le spectre UVA est un composé de type LiScGeO4:Bi3+, LiYGeO4:Bi3+, Sr2MgGe2O7-Pb2+, NaLuGeO4:Bi3+, ou CaMgGeO4: Bi3+ ;
- la deuxième couche présente une épaisseur supérieure à celle de la troisième couche ;
- le liant de la deuxième couche et de la troisième couche est de type polychlorure de vinyle ou de type polyuréthane.

### Brève description des figures

D'autres caractéristiques et avantages de l'invention apparaîtront à la lecture de la description détaillée suivante donnée à titre d'exemple nullement limitatif, en référence aux dessins annexés dans lesquels :

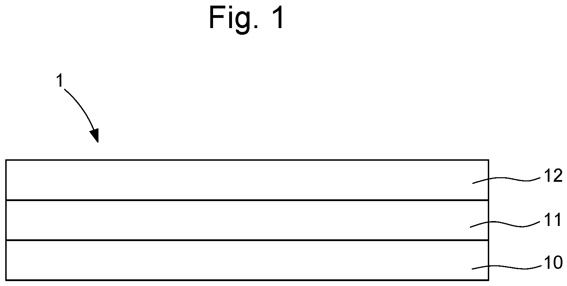

- la figure 1 représente une vue schématique en coupe d'un adhésif selon l'invention.

### Description détaillée de l'invention

L'adhésif 1 luminescent pour composant horloger selon l'invention comprenant une première couche 10 d'une matière adhésive, une seconde couche 11, dite couche intermédiaire, comprenant un liant chargé entre 10% et 80% en masse d'un pigment phosphorescent émettant dans le spectre UVA, et une troisième couche 12 comprenant un liant chargé entre 10% et 50% en masse d'un pigment phosphorescent émettant dans le spectre visible.

La matière adhésive utilisée pour la première couche est une matière adhésive permettant de repositionner l'adhésif si besoin. De préférence, la matière adhésive de la première couche est choisie parmi l'époxy, l'acrylique, le polyuréthane ou encore un solvant caoutchouc.

La première couche présente une épaisseur comprise entre 20µm et 200µm, et de préférence entre 20µm et 50Yµm.

La seconde couche 11 de l'adhésif comprend un pigment phosphorescent émettant dans le spectre UVA, ce pigment présente un pic d'émission à une longueur d'onde comprise entre 300nm et 400nm.

La seconde couche comprend une épaisseur comprise entre 50µm et 500µm, et de préférence une épaisseur comprise entre 200µm et 300µm. La seconde couche doit présenter une épaisseur suffisante pour qu'elle soit suffisamment opaque et réfléchissante de manière à forcer l'émission des pigments vers la troisième couche.

De préférence, le pigment phosphorescent émettant dans le spectre UVA utilisé pour la seconde couche est un composé type LiScGeO₄:Bi³⁺, LiYGeO₄:Bi³⁺, Sr₂MgGe₂O₇:Pb²⁺, NaLuGeO₄:Bi³⁺, ou CaMgGeO₄: Bi³⁺.

Le liant utilisé pour la seconde couche 11 et la troisième couche 12 est de type polychlorure de vinyle ou de type polyuréthane.

La troisième couche comprend une épaisseur comprise entre 50µm et 500µm, et de préférence comprise entre 150µm et 250µm.

Avantageusement, la troisième couche présente une épaisseur inférieure à l'épaisseur de la seconde couche pour obtenir une transparence suffisante pour le passage des rayons UV jusqu'à la seconde couche 11.

Le pigment phosphorescent émettant dans le spectre visible utilisé dans la troisième couche est de la famille des aluminates de strontium (SrₓAl_{y}O_{z}) dopé avec de l'europium (Eu2+) ou du dysprosium (Dy3+).

Grâce à ces différents aspects de l'invention, on dispose d'un adhésif luminescent apte à restituer de la lumière pendant une plus longue durée.

Bien entendu, la présente invention ne se limite pas à l'exemple illustré et est susceptible de diverses variantes et modifications qui apparaîtront à l'homme de l'art, sans sortir du cadre de l'invention tel que définie par les revendications.

## Revendications

1. Adhésif (1) luminescent pour composant horloger comprenant :
- une première couche (10) d'une matière adhésive ;
- une seconde couche (11), dite couche intermédiaire, comprenant un liant chargé entre 10% et 80% en masse d'un pigment phosphorescent émettant dans le spectre UVA ;
- une troisième couche (12) comprenant un liant chargé entre 10% et 50% en masse d'un pigment phosphorescent émettant dans le spectre visible.

2. Adhésif (1) selon la revendication 1, **caractérisé en ce que** la troisième couche (12) est semi-transparente aux rayons UV.

3. Adhésif (1) selon la revendication 1 ou 2, dans lequel la première couche (10) est de type époxy, acrylique, polyuréthane ou un solvant caoutchouc.

4. Adhésif (1) selon l'une des revendications 1 à 3, dans lequel le pigment phosphorescent émettant dans le spectre UVA présente un pic d'émission à une longueur d'onde comprise entre 300nm et 400nm.

5. Adhésif (1) selon l'une des revendications 1 à 4, dans lequel la première (10) couche comprend une épaisseur comprise entre 20 µm et 200µm.

6. Adhésif (1) selon l'une des revendications 1 à 5, dans lequel la deuxième couche (11) comprend une épaisseur comprise entre 50µm et 500µm.

7. Adhésif (1) selon l'une des revendications 1 à 6, dans lequel la troisième couche (12) comprend une épaisseur comprise entre 50µm et 500µm.

8. Adhésif (1) selon l'une des revendications 1 à 7, dans lequel le pigment phosphorescent émettant dans le spectre visible est de l'aluminate de strontium (SrAl₂O₄) dopé avec de l'europium (Eu²⁺) ou du dysprosium (Dy3*).

9. Adhésif (1) selon l'une des revendications 1 à 8, dans lequel le pigment phosphorescent émettant dans le spectre UVA est un composé de type LiScGeO₄:Bi³⁺, LiYGeO₄:Bi³⁺, Sr₂MgGe₂O₇:Pb²⁺, NaLuGeO₄:Bi³⁺, ou CaMgGeO₄: Bi³⁺.

10. Adhésif (1) selon l'une des revendications 1 à 9, dans lequel la deuxième couche (11) présente une épaisseur supérieure à celle de la troisième couche (12).

11. Adhésif (1) selon l'une des revendications 1 à 9, dans lequel le liant de la deuxième couche (11) et de la troisième couche (12) est de type polychlorure de vinyle ou de type polyuréthane.
